# EUROPÄISCHE PATENTSCHRIFT

(11) **EP 2 220 719 B1**
(45) Veröffentlichungstag und Bekanntmachung des Hinweises auf die Patenterteilung: **11.06.2014**
(21) Anmeldenummer: 08863520.6
(22) Anmeldetag: 21.11.2008
(51) Int. Cl.: H01M 2/10, H01M 2/20, H01M 10/60

(54) **BATTERIE MIT EINEM GEHÄUSE UND EINER WÄRMELEITPLATTE**
BATTERY COMPRISING A CASE AND A HEAT-CONDUCTING PLATE
BATTERIE CONSTITUÉE D'UN COFFRET ET D'UNE PLAQUE THERMOCONDUCTRICE

(30) Priorität: 20.12.2007 DE 102007063195
(43) Veröffentlichungstag der Anmeldung: 25.08.2010
(73) Patentinhaber: Daimler AG, 70327 Stuttgart (DE)
(72) Erfinder: MEINTSCHEL, Jens, 73730 Esslingen (DE); SCHRÖTER, Dirk, 71364 Winnenden (DE)
(74) Vertreter: JENSEN & SON
(86) Internationale Anmeldenummer: PCT/EP2008/009851
(87) Internationale Veröffentlichungsnummer: WO 2009/080165

(56) Entgegenhaltungen:
- WO-A-2007/053993
- DE-A1- 10 055 620
- US-A- 5 634 612

## Beschreibung

Die Erfindung betrifft eine Batterie mit einem Gehäuse und einer Wärmeleitplatte, wobei die Batterie mehrere, insbesondere parallel und/oder seriell miteinander verschaltete Einzellzellen aufweist, die zu einem Zellverbund zusammengefasst sind gemäß dem Oberbegriff des Anspruchs 1, wie sie beispielsweise aus der gattungsbildend zugrunde gelegten DE 698 23 745 T2 als bekannt hervorgeht.

Aus der zugrunde gelegten DE 698 23 745 T2 ist eine Batterie mit einem Gehäuse bekannt, in dessen Inneren mehrere Einzelzellen angeordnet sind. Die Einzelzellen sind in Längsrichtung endseitig jeweils mit einem Pol versehen. Mehrere Einzelzellen sind zu einem Zellverbund zusammengefasst. Die Pole aneinander angrenzender Einzelzellen zweier benachbarter Zellverbunde sind in Bohrungen einer Wärmeleitplatte angeordnet. Die an einer Stirnseite eines Zellenverbunds angeordneten Einzelzellen wiesen einen direkten wärmeleitenden Kontakt mit der Wärmeleitplatte auf,. Die verbleibenden Einzelzellen, auch die an der anderen Stirnseite angeordneten, sind mittels Wärmeleitstäben indirekt wärmeleitend mit der Wärmeleitplatte verbunden, wobei die Wärmeleitstäbe alle längsseitig hintereinander angeordneten Einzelzellen stützen. Aus der DE 698 25 067 T2 ist eine Batterie mit prismatisch geformten Einzelzellen bekannt. Die Einzelzellen werden zu Zellverbunden zusammengefasst. An Flachseiten des Zellverbundes, an denen keine elektrischen Pole angeordnet sind, sind Wärmeleitplatten angeordnet.

Aus der US-A-5 634 612 ist eine Batterie mit einer Vorrichtung zum Temperieren der Batterie bekannt. Die Batterie weist mehrere Einzelzellen auf, die wärmeleitend mit der Vorrichtung zum Temperieren der Batterie verbunden und die zu einem Zellverbund zusammengefasst sind. Die Batterie ist in Längsrichtung aus mindestens zwei hintereinander angeordneten Zellverbunden gebildet, zwischen denen die Vorrichtung zum Temperieren der Batterie angeordnet ist. Die jeweiligen Einzelzellen sind in Längsrichtung endseitig jeweils mit einem Pol Versehen. Die Pole von aneinander angrenzenden Einzelzellen zweier benachbarter Zellverbunde liegen einander gegenüber, wobei aneinander angrenzende Einzelzellen von benachbarten Zellverbunden elektrisch miteinander verbunden sind. Die einander gegenüberliegenden Pole benachbarter Zellverbunde ragen in Bohrungen der Vorrichtung zum Temperieren der Batterie hinein, wobei die Vorrichtung zum Temperieren der Batterie ein Chassis umfasst, welches aus einer Grundplatte mit zwei Teilplatten und einer zwischen den beiden Teilplatten verlaufenden Kanalstruktur aus Wärmeleitungen besteht.

Aus der nicht vorveröffentlichten DE 102007010739.2-45 ist eine Batterie mit einem Gehäuse und einer Wärmeleitplatte zum Temperieren der Batterie bekannt. Die Batterie ist als Fahrzeugbatterie, beispielsweise in einem Fahrzeug mit Hybridantrieb und/oder in einem mit Brennstoffzellen betriebenen Fahrzeug, einsetzbar. Dabei weist die Batterie mehrere parallel und/oder seriell miteinander verschaltete Einzelzellen auf, die mit den Längsachsen parallel zueinander angeordnet sind und einen Zellverbund bilden. Für eine Wärmeabführung sind die Einzelzellen kopf- oder stirnseitig wärmeleitend mit der Wärmeleitplatte verbunden. Darüber hinaus sind die Einzelzellen für eine Wärmeabführung mit einer Ummantelung, beispielsweise aus Aluminium, versehen, die mit der Wärmeleitplatte verbunden ist. Für eine effiziente Wärmeableitung ist innerhalb der Wärmeleitplatte eine Kanalstruktur angeschlossen, welche von einem Wärmeleitmedium durchströmt ist, das über Anschlussstellen zu- bzw. abführbar ist. Die bei Ladung und Entladung der Batterie entstehende Wärme in den Einzelzellen, insbesondere Lithium-Ionen-Batteriezellen, welche eine maximal zulässige Temperatur von 50°C aufweisen, ist beispielsweise über die Kanalstruktur der Wärmeleitplatte in einen Klimakreislauf einer Klimaanlage in einem Fahrzeug abführbar.

Der Erfindung liegt die Aufgabe zugrunde, eine Batterie für Fahrzeuge mit einem Hybridantrieb anzugeben, welche kostengünstig und einfach aufgebaut ist.

Die Aufgabe wird erfindungsgemäß durch die in Anspruch 1 angegebenen Merkmale gelöst. Vorteilhafte Weiterbildungen der Erfindung sind Gegenstand der Unteransprüche.

Die erfindungsgemäße Batterie (auch Zellblock genannt) mit einem Gehäuse und einer Wärmeleitplatte zum Temperieren der Batterie weist mehrere Einzelzellen, beispielsweise Lithium-Ionen-Batteriezellen, auf, die wärmeleitend mit der Wärmeleitplatte verbunden sind. Dabei umfasst die Batterie in Längsrichtung mindestens zwei hintereinander angeordnete Zellverbunde, in denen mehrere parallel und/oder seriell miteinander verschalteten Einzelzellen angeordnet sind. Für eine Bauraum optimierte Bauweise der Batterie ist anstelle von zwei stirn- oder kopfseitig angeordneten Wärmeleitplatten zwischen den Zellverbunden eine einzelne Wärmeleitplatte angeordnet, die die Wärme aus Einzelzellen zweier Zellverbunde abführt. Somit ist beidseitig der Wärmeleitplatte eine Wärmeübertragung möglich.

Vorzugsweise sind die Einzelzellen in Längsausdehnung endseitig, d. h. kopf- und bodenseitig, jeweils mit einem Pol versehen. Anhand dieser, einander gegenüberliegende Pole aufweisenden Ausbildung jeder Einzelzelle und der zwischen jeweils zwei Zellverbunden und somit zwischen zwei hintereinander angeordneten Einzelzellen angeordneten Wärmeleitplatte ist die Batterie je nach Anforderung um weitere Zellverbunde kopf- und/oder bodenseitig erweiterbar.

Für eine effiziente Wärmeabführung von den Einzelzellen der jeweiligen Zellverbunde ist zwischen diesen die Wärmeleitplatte angeordnet. Dabei sind die Einzelzellen eines einzelnen Zellverbundes mit den Längsachsen parallel nebeneinander angeordnet und jeweils wärmeleitend mit der Wärmeleitplatte verbunden. Die aneinander angrenzenden Einzelzellen von benachbarten Zellverbunden sind in Längsausdehnung hintereinander und unter Zwischenanordnung der Wärmeleitplatte einander gegenüberliegend angeordnet.

Erfindungsgemäß ragen die Pole der einander gegenüberliegenden Einzelzellen benachbarter Zellverbunde in Bohrungen der Wärmeleitplatte hinein und sind dort elektrisch miteinander verbunden. Dabei kann es sich insbesondere um eine Durchgangsbohrung handeln. Somit liegen sich die Pole von aneinander angrenzenden Einzelzellen zweier Zellverbunde Bauraum optimiert gegenüber. In einer möglichen Ausgestaltung der Erfindung weisen die Pole bevorzugt jeweils ein Außengewinde auf, mittels dessen die jeweilige Einzelzelle in einer der Bohrungen der Wärmeleitplatte befestigbar ist.

Mittels der an den Polen ausgebildeten Außengewinde und dazu in den Bohrungen angeordneten korrespondierender Gegenstücke, insbesondere Gewindehülsen mit Innengewinde oder Innengewinde in den Bohrungen, sind die Einzelzellen elektrisch und miteinander verbunden sowie in der Wärmeleitplatte fixierbar. Durch die an der Wärmeleitplatte zweiseitigen Anordnung und form- und kraftschlüssige Befestigung der Einzelzellen zweier Zellverbunde ist die Batterie vorteilhaft, beispielsweise liegend, in ein Batteriegehäuse einbaubar.

Die erfindungsgemäße Batterie, insbesondere eine Fahrzeugbatterie, ist bevorzugt in einem Fahrzeug mit Hybridantrieb und/oder in einem mit Brennstoffzellen betriebenen Fahrzeug, insbesondere in einem Kraftfahrzeug zur Personenbeförderung, einsetzbar.

Um eine elektrische Isolation zwischen Wärmeleitplatte und Zellverbunden sicherzustellen, ist vorzugsweise jeweils ein Isolationsring auf die Pole der durch die Bohrungen der Wärmeleitplatte hindurch kontaktierenden Einzelzellen aufgesetzt. Der Isolationsring stellt bevorzugt einen vorgebbaren Wärmeleitspalt zwischen Einzelzelle und Wärmeleitplatte ein. In einer möglichen Ausführungsform sind die Isolationsringe zweckmäßig aus Kunststoff gebildet.

Für eine Sicherstellung der elektrischen Isolation der einzelnen im Batteriegehäuse angeordneten Bauteile, wie Einzelzellen, Wärmeleitstäbe, ist in einer weiteren Ausgestaltung der Erfindung in den Zwischenräumen von Wärmeleitplatte und Einzelzellen der Zellverbunde, d. h. in Wärmeleitspalten, eine elektrisch isolierende und bevorzugt wärmeleitfähige Vergussmasse und/oder ein elektrisch isolierender und bevorzugt wärmeleitfähiger Schaum angeordnet. Dabei füllen die Vergussmasse und/oder der Schaum die Hohlräume des Batteriegehäuses vollständig aus. Hierdurch werden die oben genannten Zwischenräume innerhalb des Batteriegehäuses effizient zur Wärmeableitung und elektrischen Isolation genutzt, wobei gleichzeitig die Stabilität des gesamten Batteriegehäuses erhöht ist.

In einer möglichen Ausführungsform der erfindungsgemäßen Batterie weisen die Einzelzellen jeweils eine Ummantelung zur Wärmeableitung auf. Die Ummantelung ist vorzugsweise aus Aluminium gebildet und kann eine ungleichmäßig ausgebildete Wanddicke aufweisen, wodurch die Wärme in Längsrichtung der Einzelzellen abführbar ist. Beispielsweise kann die Wanddicke in Längsausdehnung der Einzelzelle zu- oder abnehmen.

Zusätzlich können für eine effiziente Wärmeableitung von den Einzelzellen, welche im Betrieb eine zulässige maximale Temperatur von 50°C aufweisen, in einer weiteren Ausgestaltung der erfindungsgemäßen Batterie in den Zwischenräumen der Einzelzellen des jeweiligen Zellverbundes Wärmeleitstäbe, bevorzugt aus Aluminium, angeordnet sein. Durch eine beispielsweise hexagonale Anordnung der Wärmeleitstäbe um die jeweilige Einzelzelle herum wird die insbesondere beim Laden entstehende Wärme von den Einzelzellen um deren Umfang herum homogen zur Wärmeleitplatte abgeführt.

Um die der Wärmeleitplatte, u. a. über die Vergussmasse und/oder den Schaum und/oder die Wärmeleitstäbe, zugeführte Wärme effizient abführen zu können, ist innerhalb dieser eine Kanalstruktur mit Anschlussstellen für ein Wärmeleitmedium angeordnet. Das Wärmeleitmedium, welches die Kanalstruktur durchströmt, dient einem Abtransport der durch die Zellverbunde erzeugten Wärme, beispielsweise über einen an die Anschlussstellen angeschlossen Klimakreislauf eines Fahrzeuges.

Darüber hinaus ist die Batterie oder der Zellblock mit den durch die Einzelzellen verschalteten Zellverbunden von einem Batteriegehäuse umgeben. In einer besonders vorteilhaften Ausgestaltung der erfindungsgemäßen Batterie weist das Batteriegehäuse nach außen eine Oberflächenstruktur, insbesondere eine rillenförmige Oberflächenstruktur, auf, wodurch die Batterie zusätzlich durch das Gehäuse kühlbar ist.

Benachbarte Einzelzellen innerhalb eines Zellverbundes sind zweckmäßigerweise mittels Zellverbinder elektrisch miteinander verbunden. Durch die zwischen den Zellverbunden mittig angeordnete Wärmeleitplatte, die elektrische Kontaktierung sich gegenüberliegender Einzelzellen benachbarter Zellverbunde durch die Wärmeleitplatte hindurch sowie die elektrische Kontaktierung von nebeneinander liegenden Einzelzellen eines Zellverbundes durch die elektrischen Zellverbinder kann der Spannungsanschluss vorteilhaft nur auf einer Seite der Batterie, insbesondere nur an einem der Zellverbunde erfolgen. Eine zusätzliche Spannungsschiene zum elektrischen Anschluss der Batterie auch an dem oder den anderen Zellverbunden ist nicht mehr erforderlich und kann somit entfallen.

Ausführungsbeispiele der Erfindung werden anhand von Zeichnungen näher erläutert.

Dabei zeigen:
- Fig. 1: schematisch zwei in Längsausdehnung miteinander verbundene Einzelzellen mit endseitig angeordneten Polen,
- Fig. 2: schematisch die zwei miteinander verbundenen Einzelzellen gemäß Figur 1 in Explosionsdarstellung,
- Fig. 3: schematisch eine Batterie mit jeweils aus mehreren Einzelzellen gebildeten Zellverbunden, deren Einzelzellen über eine dazwischen liegende Wärmeleitplatte miteinander verbunden sind,
- Fig. 4: schematisch eine weitere Darstellung einer Batterie mit über Zellverbinder elektrisch verbundene Einzelzellen eines der Zellverbunde,
- Fig. 5: schematisch in perspektivischer Ansicht eine Batterie mit einem einzelnen an einem der Zellverbunde vorgesehenen Spannungsanschluss für die Batterie,
- Fig. 6: schematisch eine Kopf- oder Draufsicht der Batterie, und
- Fig. 7: schematisch eine Schnittdarstellung der Batterie gemäß Figur 6.

Einander entsprechende Teile sind in allen Figuren mit den gleichen Bezugszeichen versehen.

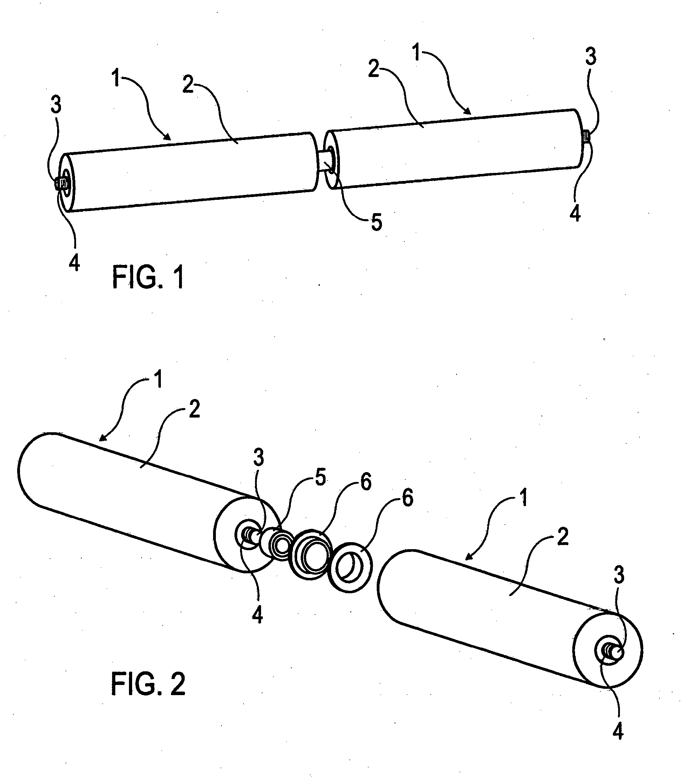

In Figur 1 sind zwei Einzelzellen 1 dargestellt, die in Längsausdehnung miteinander verbunden sind. Dabei ist die jeweilige Einzelzelle 1 von einer Ummantelung 2 umgeben, welche bevorzugt als Kreiszylinder ausgebildet ist, und zur Wärmeableitung eine nicht näher dargestellte ungleichmäßige Wanddicke aufweist.

Die jeweilige Einzelzelle 1 ist endseitig jeweils mit einem Pol 3 versehen. Die Pole 3 der dargestellten Einzelzellen 1 weisen ein Gewinde 4, insbesondere ein Außengewinde, auf. Die Einzelzellen 1 sind über die an den Polen 3 ausgebildeten Gewinde 4 sowie einer dazu korrespondierende Gewindehülse 5 elektrisch miteinander verbunden.

Figur 2 zeigt in einer Explosionsdarstellung die detaillierte Darstellung der elektrischen Verbindung der beiden Einzelzellen 1 gemäß Figur 1. Gezeigt sind die zwei Einzelzellen 1 mit an deren Polen 3 ausgebildeten Gewinden 4. Auf den sich in Längsrichtung unmittelbar einander gegenüberliegenden Polen 3 ist zur elektrischen Isolierung der Pole 3 gegenüber anderen Batteriekomponenten jeweils ein Isolationsring 6 aufsetzbar. Der Durchmesser des Isolationsrings 6 ist derart vorgegeben, dass der Isolationsring 6 auf die den Pol 3 umgebende Gewindehülse 5 aufsetzbar ist.

Bei Montage ist die Gewindehülse 5 auf einen der zueinander angeordneten Pole 3 der zwei Einzelzellen 1 aufschraubbar. Hierzu weist die Gewindehülse 5 ein mit dem Außengewinde 4 des jeweiligen Pols 3 korrespondierendes, nicht näher dargestelltes Innengewinde auf. Anschließend wird bzw. werden der oder die Isolationsringe 6 auf die auf einen der Pole 3 aufgeschraubte Gewindehülse 5 aufgesetzt. In einem nächsten Schritt ist dann die zweite Einzelzelle 1 über deren Pol 3 in das andere offene Ende der Gewindehülse 5 einschraubbar. Je nach Art und Aufbau kann ein einzelner, hohlzylindrischer Isolationsring 6 mit endseitig jeweils abgewinkelten Öffnungsrändern oder je Pol ein zugehöriger Isolationsring 6, wie dargestellt, vorgesehen sein.

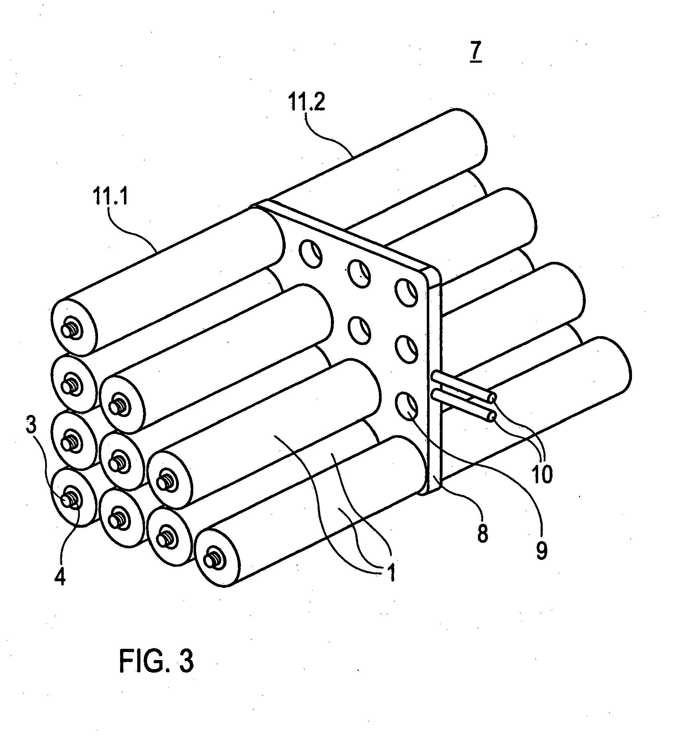

Figur 3 zeigt eine Batterie 7 (auch Zellblock genannt) mit jeweils hintereinander angeordneten unvollständigen Zellverbunden 11.1, 11.2 und einer zwischen diesen angeordneten Wärmeleitplatte 8.

Der jeweilige Zellverbund 11.1, 11.2 umfasst eine Mehrzahl von parallel nebeneinander angeordneten Einzelzellen 1, die mit den Einzelzellen 1 des benachbarten Zellverbundes 11.1, 11.2 durch die zwischen diesen angeordnete Wärmeleitplatte 8 in der oben beschriebenen Art und Weise (Figuren 1 und 2) elektrisch miteinander verbunden sind.

Die Wärmeleitplatte 8 weist hierzu Bohrungen 9 auf, die als Durchgangsbohrungen ausgebildet sind. Der Durchmesser der Bohrungen 9 ist dabei derart gewählt, dass dieser kleiner als der Durchmesser des jeweiligen Zellbodens der Einzelzelle 1 und größer als der Außendurchmesser der Gewindehülse 5 ist.

Im Detail werden zunächst die Einzelzellen 6 eines der beiden Zellverbunde 11.1 auf einer der Seiten der Wärmeleitplatte 8 in die Bohrungen 9 mit bereits auf dem jeweiligen Pol 3 aufgeschraubter Gewindehülse 5 und auf dieser aufgestecktem Isolationsring 6 eingeführt. Anschließend werden dann auf der anderen Seite der Wärmeleitplatte 8 die Einzelzellen 1 des anderen Zellverbundes 11.2 in die Gewindehülse 5 eingeschraubt bis die Einzelzelle 1 fest an der Wärmeleitplatte 8 über die Schraubverbindung angeordnet ist.

Alternativ können zunächst die Isolationsringe 6 in die Bohrungen 9 eingesteckt und dort, z. B. rastend, fixiert werden, in welche dann die Gewindehülsen 5 eingesteckt und, z. B. rastend, fixiert werden. Anschließend werden die jeweiligen Einzelzellen 1 über deren Pole 3 mit dem Außengewinde 4 in die Gewindehülse 5 beidseitig der Wärmeleitplatte 8 eingeschraubt. In diesem Ausführungsbeispiel sind zusätzliche Fixierelemente für die Isolationsringe 6 und die Gewindehülsen 5 erforderlich.

Im anderen Ausführungsbeispiel mit bereits auf Pole 3 von Einzelzellen 1 einer der Zellverbunde 11.1 aufgeschraubten Gewindehülsen 5 und aufgesteckten Isolationsringen 6 werden die Einzelzellen 1 beider angrenzender Zellverbunde 11.1, 11.2 an die Wärmeleitplatte 8 durch Einschrauben der Pole 3 der Einzelzellen 1 des anderen Zellverbundes 11.2 angeschraubt und befestigt.

Somit sind die Einzelzellen 1 eines jeweiligen Zellverbundes 11.1, 11.2 an der Wärmeleitplatte 3 form- und kraftschlüssig befestigt sowie die Einzelzellen 1 beider Zellverbunde 11.1, 11.2 miteinander kraftschlüssig und elektrisch miteinander verbunden. Für eine elektrische Verbindung der Einzelzellen 1 zweier Zellverbunde 11.1, 11.2 ist die Gewindehülse 5 aus einem elektrisch leitenden Material, insbesondere aus einem Metall.

Somit kontaktieren die Einzelzellen 1 der hintereinander angeordneten Zellverbunde 11.1, 11.2 durch die Bohrungen 9 hindurch elektrisch miteinander und sind beidseitig horizontal an der Wärmeleitplatte 8 mittels der ausgebildeten Gewinde 4 an den Polen 3 sowie der dazu korrespondierenden und in den Bohrungen 9 eingesetzten Gewindehülsen 5 form- und kraftschlüssig befestigt.

Darüber hinaus weist die Wärmeleitplatte 8 Anschlussstellen 10 zum Zu- und Abführen eines die Wärmeleitplatte 8 durchströmenden Wärmeleitmediums, insbesondere einem Kühlmittel, z. B. Luft oder ein flüssiges Kühlmedium, auf.

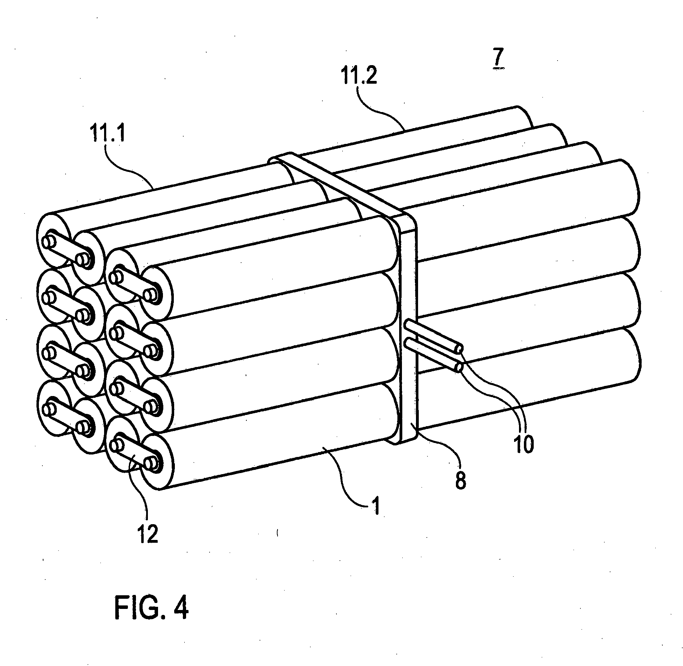

Figur 4 zeigt eine kopf- oder bodenseitige Darstellung einer Batterie 7 mit der mittig zwischen den hintereinander angeordneten Zellverbunden 11.1, 11.2 angeordneten Wärmeleitplatte 8.

Die Pole 3 der Einzelzellen 1 der jeweiligen an der Wärmeleitplatte 8 angeordneten Zellverbunde 11.1, 11.2 sind an ihrem freien Ende über Zellverbinder 12 verbunden. Mittels der Zellverbinder 12 sind die Pole 3 nebeneinander liegender Einzelzellen 1 eines einzelnen Zellverbundes 11.1, 11.2 miteinander elektrisch verbunden, beispielsweise parallel und/oder seriell miteinander verschaltet.

Der jeweilige Zellverbund 11.1, 11.2 weist beispielsweise eine Anordnung von vier mal vier Einzelzellen 1 auf.

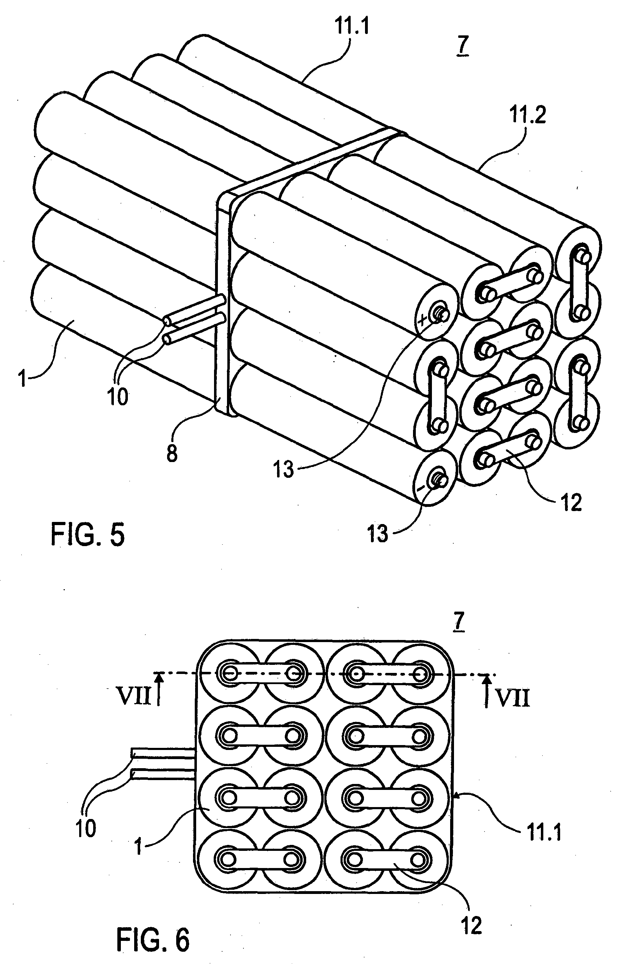

In Figur 5 ist die gegenüberliegende Seite der Batterie 7 gemäß Figur 4 gezeigt.

Auch hier sind die Einzelzellen 1 des Zellverbundes 11.1, 11.2 über die Zellverbinder 12 elektrisch miteinander verbunden. Je nach Anwendung der Batterie 7 können die Einzelzellen 1 der jeweiligen Zellverbunde 11.1, 11.2 parallel und/oder seriell miteinander verschaltet sein.

An der gezeigten Stirn- oder Kopfseite ist die Batterie 7 mit einem Spannungsanschluss 13 versehen. Dabei sind die Einzelzellen 1 beider Zellverbunde 11.1, 11.2 derart elektrisch miteinander verschaltet, dass diese nur über diesen einzelnen, auf einer der Seiten der Batterie 7 (Kopf- oder Bodenseite) angeordneten Spannungsanschluss 13 versorgt werden. Der Spannungspfad ist durch die gesamte Batterie 7 über die elektrische Verbindung aller Einzelzellen 1 geführt. Dadurch ist eine Verlegung zusätzlicher Spannungsschienen nicht erforderlich.

Figur 6 zeigt schematisch eine Draufsicht auf die in Figur 4 dargestellte Rückseite der erfindungsgemäßen Batterie 7 ohne Spannungsanschluss 13 mit den elektrischen Zellverbinder 12, der die Einzelzellen 1 miteinander elektrisch verbindet.

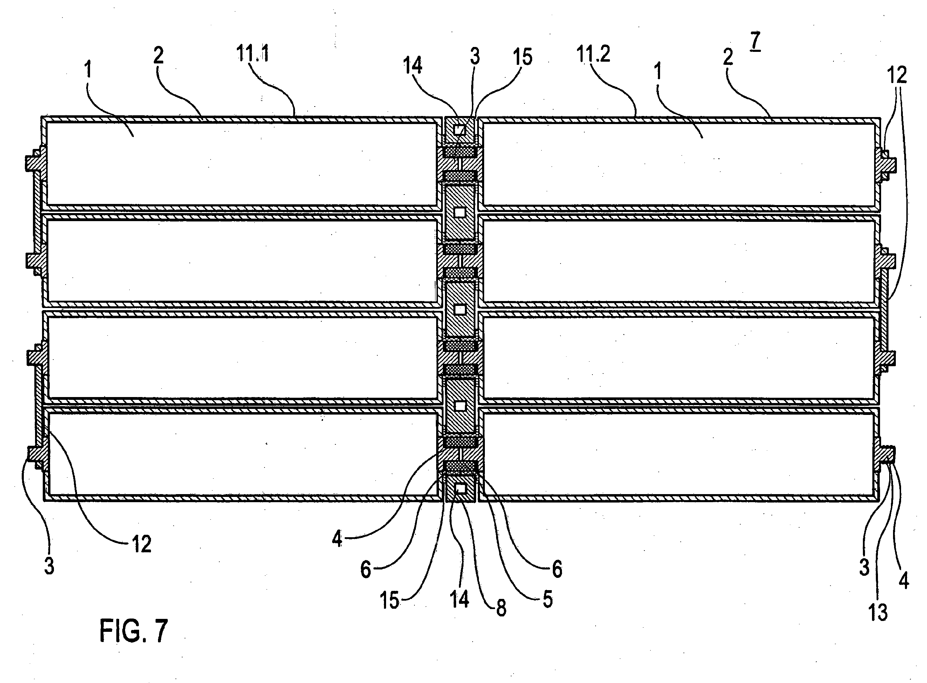

Figur 7 zeigt einen Längsschnitt der Batterie 7 mit den hintereinander angeordneten Zellverbunden 11.1, 11.2 und zwischen diesen angeordneter Wärmeleitplatte 8 gemäß Figur 6.

Innerhalb der Wärmeleitplatte 8 ist eine Kanalstruktur 14 für das Wärmeleitmedium angeordnet, das über die Anschlussstellen 10 zu- und wieder abführbar ist. Das Wärmeleitmedium durchströmt die Kanalstruktur 14 und führt dadurch die der Wärmeleitplatte 8 zugeführte Wärme ab. Dadurch ist die der Wärmeleitplatte 8 durch die Zellverbunde 11.1, 11.2 zugeführte Wärme abführbar.

Die Einzelzellen 1 der sich gegenüberliegenden Zellverbunde 11.1, 11.2 sind durch die Bohrungen 9 hindurch über die Gewindehülse 5 elektrisch miteinander kontaktiert und formschlüssig an der Wärmeleitplatte 8 befestigt. Auf die in der Wärmeleitplatte 8 angeordneten Pole 3 der Einzelzellen 1 sind zur elektrischen Isolierung zwischen Einzelzelle 1 und Wärmeleitplatte 8 die Isolationsringe 6 aufgesetzt. Die Isolationsringe 6 umschließen die Pole 3 sowie die Gewindehülse 5. Durch den abgewinkelten Öffnungsrand der Isolationsringe 6 ist gleichzeitig ein vorgebbarer Wärmeleitspalt 15 zwischen Wärmeleitplatte 8 und Einzelzelle 1 eingestellt, der beispielsweise bei einem Vergussprozess mit nicht näher dargestellter elektrisch isolierender und wärmeleitfähige Vergussmasse und/oder einem elektrisch isolierenden sowie wärmeleitfähigen Schaum ausfüllbar ist.

Des Weiteren kann vorzugsweise jeder Hohlraum der Batterie 7 sowie jeder Zwischenraum zwischen den Einzelzellen 1 und/oder der Wärmeleitplatte 8 und/oder dem nicht näher dargestellten Batteriegehäuses mit einer wärmeleitenden Vergussmasse und/oder einem Wärme leitenden Schaum ausgefüllt sein.

Die am zur Wärmeleitplatte 8 gegenüberliegenden Ende angeordneten und frei liegenden Pole 3 der Einzelzellen 1 sind bevorzugt über die Zellverbinder 12 elektrisch miteinander verbunden.

### Bezugszeichenliste

- 1: Einzelzellen
- 2: Ummantelung
- 3: Pole
- 4: Gewinde
- 5: Gewindehülse
- 6: Isolationsring
- 7: Batterie
- 8: Wärmeleitplatte
- 9: Bohrungen
- 10: Anschlussstellen für Wärmeleitmedium
- 11: Zellverbund
- 12: Zellverbinder
- 13: Spannungsanschluss
- 14: Kanalstruktur für Wärmeleitmedium
- 15: Wärmeleitspalt

## Patentansprüche

1. Batterie (7) mit einem Gehäuse und einer Wärmeleitplatte (8) zum Temperieren der Batterie (7), wobei die Batterie (7) mehrere Einzelzellen (1) aufweist, wobei eine Einzelzelle (1) in Längsrichtung endseitig jeweils mit einem Pol (3) versehen ist, Pole (3) aneinander angrenzenden Einzelzellen (1) zweier benachbarter Zellverbunde (11.1, 11.2) einander gegenüberliegen und mehrere Einzelzellen zu einem Zellverbund (11.1 oder 11.2) zusammengefasst sind, wobei die Batterie (7) in Längsrichtung aus mindestens zwei hintereinander angeordneten Zellverbunden (11.1, 11.2) gebildet ist, wobei Einzelzellen (1) eines Zellenverbund (11.1 oder 11.2) wärmeleitend mit einer Wärmeleitplatte (8) verbunden sind, und einander gegenüberliegenden Pole (3) benachbarter Zellverbunde (11.1, 11.2) in Bohrungen (9) der Wärmeleitplatte (8) hinein ragen und dort elektrisch miteinander verbunden sind,
**dadurch gekennzeichnet, dass**
zwischen jedem der hintereinander angeordneten Zellverbunde (11.1, 11.2) jeweils eine Wärmeleitplatte (8) angeordnet ist, dass jede Einzelzelle (1) eines Zellverbundes (11.1 oder 11.2) mit einer Wärmeleitplatte (8) wärmeleitend verbunden ist, dass die Pole (3) Gewinde (4) aufweisen, dass die Pole (3) aneinander angrenzender Einzelzellen (1), die zu hintereinander angeordneten Zellverbunden (11.1, 11.2) gehören, einander gegenüberliegend in eine Gewindehülse (5) einschraubbar sind und dass mittels der Gewindehülsen (5) elektrisch miteinander verbundenen Einzelzellen (1) mittels der Gewindehülse (5) gleichfalls an der Wärmeleitplatte (8) befestigt sind.

2. Batterie nach Anspruch 1,
**dadurch gekennzeichnet, dass**
ein Zellverbund (11.1, 11.2) eine Mehrzahl von parallel nebeneinander angeordneten Einzelzellen 1 umfasst.

3. Batterie nach Anspruch 2,
**dadurch gekennzeichnet, dass**
Einzelzellen 1 benachbarter Zellverbunde (11.1, 11.2 durch die zwischen diesen angeordnete Wärmeleitplatte 8 elektrisch miteinander verbunden sind.

4. Batterie nach Anspruch 3,
**dadurch gekennzeichnet, dass**
die mittels der Gewindehülsen (5) elektrisch miteinander verbundenen Einzelzellen (1) mittels der Gewindehülse (5) an der Wärmeleitplatte (8) befestigt sind.

5. Batterie nach einem der Ansprüche 2 bis 4,
**dadurch gekennzeichnet, dass**
auf den zur Wärmeleitplatte (8) gerichteten Polen (3) der jeweiligen Einzelzellen (1) jeweils mindestens ein Isolationsring (6) angeordnet ist.

6. Batterie nach Anspruch 5,
**dadurch gekennzeichnet, dass**
die Isolationsringe (6) aus Kunststoff gebildet sind.

7. Batterie nach einem der Ansprüche 1 bis 6,
**dadurch gekennzeichnet, dass**
innerhalb des Gehäuses in Zwischenräumen zwischen Wärmeleitplatte (8) und Einzelzellen (1) sowie zwischen den Einzelzellen (1) eine elektrisch isolierende und wärmeleitfähige Vergussmasse und/oder ein elektrisch isolierender sowie wärmeleitfähiger Schaum angeordnet ist.

8. Batterie nach Anspruch 7,
**dadurch gekennzeichnet, dass**
der Zwischenraum vollständig von der Vergussmasse und/oder dem Schaum ausgefüllt ist.

9. Batterie nach einem der Ansprüche 1 bis 8,
**dadurch gekennzeichnet, dass**
innerhalb der Wärmeleitplatte (8) eine Kanalstruktur (14) angeordnet ist.

10. Batterie nach einem der Ansprüche 1 bis 9,
**dadurch gekennzeichnet, dass**
an den frei liegenden Enden der Einzelzellen (1) elektrische Zellverbinder (12) angeordnet sind.

## Claims

1. Battery (7) comprising a case and a heat-conducting plate (8) for tempering the battery (7), wherein the battery (7) comprises a plurality of individual cells (1), wherein an individual cell (1) is provided with a terminal post (3) at each end in the longitudinal direction, terminal posts (3) of adjoining individual cells (1) of two adjacent cell composites (11.1, 11.2) are located opposite one another and several of individual are combined to form a cell composite (11.1 or 11.2), wherein the battery (7) is made up of at least two cell composites (11.1, 11.2) arranged one behind the other in the longitudinal direction, wherein individual cells (1) of a cell composite (11.1 or 11.2) are connected to a heat-conducting plate (8) in a heat-conducting arrangement and opposite terminal posts (3) of adjacent cell composites (11.1, 11.2) extend into bores (9) of the heat-conducting plate (8) and are there electrically connected to one another,
**characterised in that**
between each of the cell composites (11.1, 11.2) arranged one behind the other, there is located a heat-conducting plate (8), **in that** each individual cell (1) of a cell composite (11.1 or 11.2) is connected to a heat-conducting plate (8) in a heat-conducting arrangement, **in that** the terminal posts (3) have threads (4), **in that** the terminal posts (1) of adjoining individual cells (1) belonging to cell composites (11.1, 11.2) arranged one behind the other can be tightened into a threaded sleeve (5) in a mutually opposite arrangement, and **in that** individual cells (1) which are electrically connected to one another by means of the threaded sleeves (5) are also secured to the heat-conducting plate (8) by means of the threaded sleeves (5).

2. Battery according to claim 1,
**characterised in that**
a cell composite (11.1, 11.2) comprises a plurality of individual cells (1) arranged parallel and next to one another.

3. Battery according to claim 2,
**characterised in that**
individual cells (1) of adjacent cell composites (11.1, 11.2) are electrically connected to one another by the heat-conducting plate (8) arranged between them.

4. Battery according to claim 2,
**characterised in that**
the individual cells (1) electrically connected to one another by means of the threaded sleeves (5) are secured to the heat-conducting plate (8) by means of the threaded sleeve (5).

5. Battery according to any of claims 2 to 4,
**characterised in that**
at least one insulation ring (6) is provided on the terminal posts (3) of the respective individual cells (1) which are oriented towards the heat-conducting plate (8).

6. Battery according to claim 5,
**characterised in that**
the insulation rings (6) are made of a plastic material.

7. Battery according to any of claims 1 to 6,
**characterised in that**
an electrically insulating and thermally conductive insulating compound and/or an electrically insulating and thermally conductive foam material is/are provided within the case in spaces between heat-conducting plates (8) and individual cells (1) as well as between the individual cells (1).

8. Battery according to claim 7,
**characterised in that**
the space is completely filled by the insulating compound and/or by the foam material.

9. Battery according to any of claims 1 to 8,
**characterised in that**
a channel structure (14) is arranged within the heat-conducting plate (8).

10. Battery according to any of claims 1 to 9,
**characterised in that**
electric cell connectors (12) are arranged at the exposed ends of the individual cells (1).

## Revendications

1. Batterie (7) comprenant un boîtier et une plaque thermoconductrice (8) destinée réguler la température de la batterie (7), ladite batterie (7) présentant plusieurs cellules individuelles (1), chaque extrémité de cellule individuelle (1) étant dotée d'un pôle (3) dans le sens longitudinal, des pôles (3) faisant face à des cellules individuelles adjacentes (1) de deux ensembles de cellules voisins (11.1, 11.2) et plusieurs cellules individuelles étant regroupées en un ensemble de cellules (11.1 ou 11.2), la batterie (7) étant formée dans le sens longitudinal par au moins deux ensembles de cellules (11.1, 11.2) disposés l'un derrière l'autre, les cellules individuelles (1) d'un ensemble de cellules (11.1 ou 11.2) étant reliées en liaison de conduction de la chaleur avec la plaque thermoconductrice (8), et les pôles (3) se faisant face l'un l'autre d'ensembles de cellules voisins (11.1, 11.2) avancent dans des alésages (9) de la plaque thermoconductrice (8) et y sont reliés électriquement les uns aux autres, **caractérisée en ce qu'**une plaque thermoconductrice est à chaque fois disposée entre chacun des ensembles de cellules (11.1, 11.2) disposés les uns derrière les autres, **en ce que** chaque cellule individuelle (1) d'un ensemble de cellules (11.1 ou 11.2) est reliée en liaison de conduction de chaleur avec une plaque thermoconductrice (8), **en ce que** les pôles (3) présentent des filetages (4), **en ce que** les pôles (3) de cellules individuelles (1) adjacentes, qui font partie d'ensembles de cellules (11.1, 11.2) disposés les uns derrière les autres, se faisant face peuvent se visser dans une douille filetée (5) et **en ce que** des cellules individuelles (1) reliées ensemble électriquement au moyen de douilles filetées (5) peuvent être également fixées au moyen de la douille filetée (5) sur la plaque thermoconductrice (8).

2. Batterie selon la revendication 1, **caractérisée en ce qu'**un ensemble de cellules (11.1, 11.2) comprend une pluralité de cellules individuelles (1) adjacentes en parallèle les unes avec les autres.

3. Batterie selon la revendication 2, **caractérisée en ce que** des cellules individuelles (1) d'ensembles de cellules adjacents (11.1, 11.2) sont reliées les unes aux autres électriquement par la plaque thermoconductrice (8) disposées entre celles-ci.

4. Batterie selon la revendication 3, **caractérisée en ce que** les cellules individuelles (1) reliées les unes aux autres électriquement au moyen des douilles filetées (5) sont fixées au moyen de la douille filetée (5) dans la plaque thermoconductrice (8).

5. Batterie selon l'une quelconque des revendications 2 à 4, **caractérisée en ce que** sur les pôles (3) orientés vers la plaque thermoconductrice (S) de chacun des ensembles de cellules (1), est disposée à chaque fois au moins une bague isolante (6).

6. Batterie selon la revendication 5, **caractérisée en ce que** les bagues isolantes (6) sont conçues en matière plastique.

7. Batterie selon l'une quelconque des revendications 1 à 6, **caractérisée en ce qu'**à l'intérieur du boîtier (8) dans les espaces intermédiaires entre la plaque thermoconductrice (8) et les cellules individuelles (1) ainsi qu'entre les cellules individuelles (1) est disposée une masse de remplissage électriquement isolante et thermoconductrice et / ou une mousse électriquement isolante et thermoconductrice.

8. Batterie selon la revendication 7, **caractérisée en ce que** l'espace intermédiaire est entièrement rempli d'une masse de remplissage et / ou de mousse.

9. Batterie selon l'une quelconque des revendications 1 à 8, **caractérisé en ce qu'**à l'intérieur de la plaque thermoconductrice (8) est disposée une structure de canal (14).

10. Batterie selon l'une quelconque des revendications 1 à 9, **caractérisée en ce que** sur les extrémités libres des ensembles de cellules (1) sont disposés des connecteurs de cellules (12) électriques.
